# EUROPEAN PATENT SPECIFICATION

(11) **EP 2 578 442 B1**
(45) Date of publication and mention of the grant of the patent: **04.06.2014**
(21) Application number: 11184152.4
(22) Date of filing: 06.10.2011
(51) Int. Cl.: B60N 2/02, B60N 2/24, B60Q 3/02

(54) **Seat for passenger transport vehicle and vehicles comprising such a seat**
Sitz für Passagiertransportfahrzeuge und Fahrzeuge mit einem solchen Sitz
Siège pour véhicule de transport de passager et véhicules comportant un tel siège

(43) Date of publication of application: 10.04.2013
(73) Proprietor: Iveco France S.A., 69200 Vénissieux (FR)
(72) Inventor: D'Achon, Claire, 49300 Cholet (FR)
(74) Representative: Cinquantini, Bruno

(56) References cited:
- DE-A1-102005 048 993
- DE-U1- 20 019 739

## Description

The present invention relates to a seat for a passenger transport vehicle, comprising a seat portion and a backrest, said backrest comprising an outer lateral edge intended to be adjacent to a passenger circulation aisle.

A seat according to the preamble of claim 1 is disclosed in DE-20019739 U1.

Passenger transport vehicle refers to any rolling vehicle including a passenger compartment intended to transport passengers, for example a bus, trolley bus, tramway, train or subway car. This type of vehicle generally comprises a plurality of seats distributed in the passenger compartment, for example in two sets adjacent to the two side walls of the vehicle. The seats then define a central path or aisle allowing passengers to circulate.

To signal this aisle and guide passengers in the vehicle, in particular at night, it is known to equip the vehicle with light sources, fixed to the floor or ceiling of the vehicle, and forming two lighted lines on either side of the aisle. Such light sources are also used to indicate seats reserved for people with reduced mobility (PRM). This solution is not fully satisfactory, as it requires passengers to raise or lower their eyes to be guided in the vehicle, therefore to divert their gaze. Furthermore, such light sources do not make it possible to clearly indicate the seats.

The invention therefore aims to resolve these drawbacks, and to allow easier orientation and circulation of passengers in the vehicle.

To that end, the invention relates to a seat according to claim 1.

The inventive device can be further characterised in that
- said angular portion is hollow and pierced with an opening, and said light source is mounted inside said angular portion so as to provide light through the opening;
- said peripheral frame comprises an assist grip handle, intended to allow the vehicle's passengers to stabilize themselves, provided with a housing for receiving said light source;
- said peripheral frame is hollow, and said seat comprises at least two electrical conductors that extend through said peripheral frame and can be connected, on the one hand, to the light source, and on the other hand, to an electrical power supply grid.

- said light source comprises at least one light-emitting diode.
- the seat is intended for a passenger with reduced mobility.

The invention also relates to a passenger transport vehicle according to claim 7.

The invention also relates to a passenger transport vehicle according to claim 8.

The invention will be better understood upon reading the following description, provided solely as an example, and done in reference to the appended drawings, in which:
- Figure 1 is a partial top view, with the roof torn away, of a passenger transport vehicle comprising two columns of seats according to one embodiment of the invention;
- Figure 2 is a perspective view of a pair of seats of the vehicle of Figure 1;
- Figure 3 is a frontal view of the pair of seats of Figure 2;
- Figure 4 is a perspective view of an element of a seat of Figure 2;
- Figure 5 is a frontal view of the element of Figure 4;
- Figure 6 is a frontal view of a pair of seats comprising a seat according to another embodiment of the invention; and
- Figure 7 is a partial top view, with the roof torn away, of a passenger transport vehicle according to another embodiment of the invention.

Hereafter, the chosen orientations are provided for information and are to be understood relative to the figures. In particular, the terms "upper" and "lower" are to be understood relative to the orientation selected in the Figures. These terms are used relative to the orientation of the seats mounted on the chassis frame of the passenger transport vehicle.

Furthermore, the terms "transverse" and "longitudinal" must be understood in relation to the longitudinal travel axis of the passenger transport vehicle.

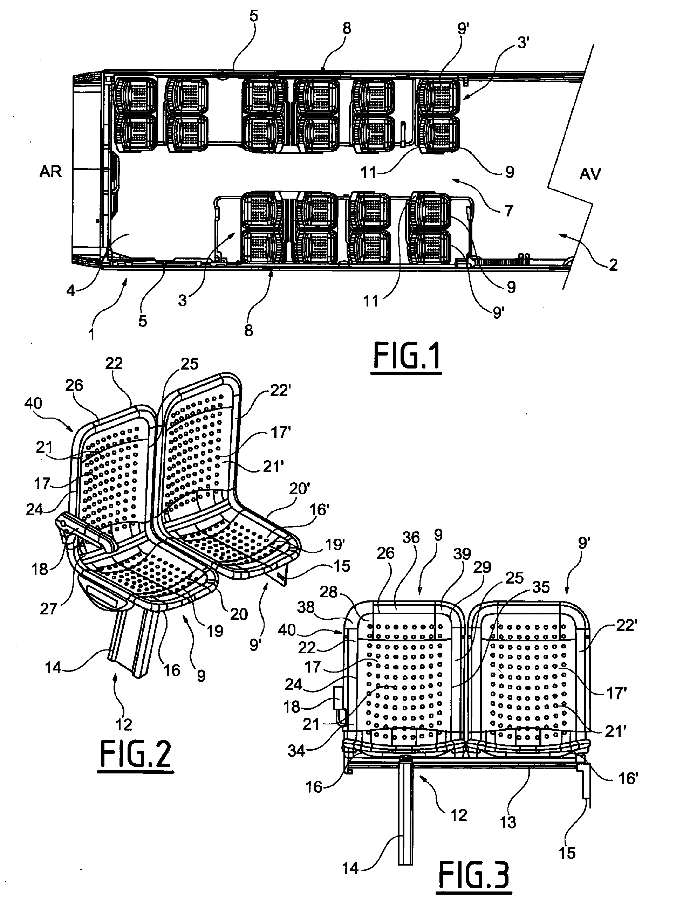

Figure 1 illustrates a passenger transport vehicle according to one embodiment of the invention.

The vehicle 1 is for example a bus. The passenger compartment 2 of the vehicle comprises two sets 3, 3' of seats arranged on the floor 4 of the vehicle 1 along two longitudinal walls 5 of the vehicle 1. The two sets 3 and 3' define an aisle 7 in particular allowing passengers to circulate. Each set 3, 3' comprises a plurality of rows 8 of seats facing the front AV or back AR of the vehicle 1, each of the rows 8 being formed by a pair of seats 9, 9'.

Each pair thus comprises one seat 9 adjacent to the aisle 7, and generally called "aisle seat," and one seat 9' adjacent to a wall 5, and called "window seat."

The seats 9 and 9' are fixed to the chassis frame of a vehicle 1.

The aisle seats 9 thus form two columns defining the aisle 7.

Each of the seats 9 comprises a light source 11, arranged near its upper corner oriented toward the aisle 6, and oriented toward the aisle 7. The seats 9 thus form a light corridor facilitating passenger circulation in the vehicle 1.

Figures 2 and 3 show a pair of seats 9, 9' of Figure 1 before mounting in the vehicle 1.

The pair of seats thus comprises an aisle seat 9 according to one embodiment and a window seat 9', aligned along a transverse axis of the vehicle 1.

The pair of seats 9, 9' comprises a load-bearing structure 12, comprising a horizontal support beam 13 for the seats 9, 9', base means 14 and fastening means 15 for fastening the beam 13 to a wall of the vehicle.

The base means 14 are fixed to the beam 12, overhanging the aisle seat 9, and are intended to be fixed 4 to the floor of the vehicle 1. The fastening means 15 for example comprise a plate fixed to one end of the beam 12 intended to be fixed to a wall of the vehicle, in a known manner, for example by screws.

Each seat 9, 9' also comprises a seat portion 16, 16' and a backrest 17, 17', intended to receive a user's body by bearing. The aisle seat 9 also comprises an armrest 18.

The seat portion 16, 16' comprises a seat panel 19, 19' and a peripheral frame 20, 20' surrounding the seat panel 19, 19'.

The backrest 17, 17' comprises a panel 21, 21' for supporting a user's back and a peripheral frame 22, 22'.

The support panel 21, 21', which is generally rectangular, comprises two vertical lateral edges 24, 25, a horizontal upper edge 26, a lower edge 27 and two rounded upper corners 28, 29.

The peripheral frame 22, 22' surrounds the support panel 21, 21' as close as possible thereto. The peripheral frame 22, 22' to that end comprises two vertical portions 34, 35, adjacent to the two vertical edges 24, 25, a horizontal upper portion 36, covering the upper edge 26, and two angular portions 38, 39, covering the upper corners 28, 29.

In particular, the peripheral frame 22 of the backrest 17 of the aisle seat 9 comprises a first angular portion 38, intended to be adjacent to the aisle of the vehicle, and a second angular portion 39 adjacent to the window seat.

The peripheral frame 22 is at least partially hollow. It comprises an inner conduit extending from the first angular portion 38, through the vertical portion 34, to a lower end of the peripheral frame 22.

The vertical portions 34, 35, the upper portions 36 and the angular portions 38, 39 are separate elements, assembled, for example by fitting, to form the peripheral frame 22. Each of these elements is hollow and comprises, at both of its ends, an opening allowing the passage of electrical cables.

Alternatively, the vertical portions 34, 35, the upper portion 36 and the angular portions 38, 39 can be made in a single piece.

The first angular portion 38 is provided with a light source 11 intended to be oriented toward the aisle of the vehicle. Thus, the light source 11 is arranged in the upper corner of the lateral edge 40 of the seatback 17 oriented toward the aisle 7.

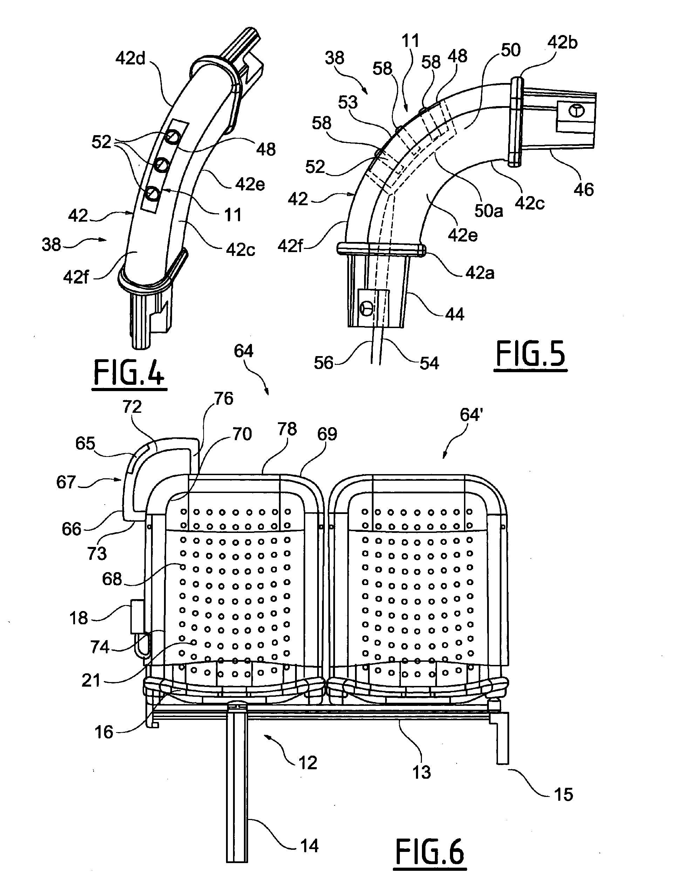

The seat 9 also comprises two electrical conductors that are visible only in Figure 5 with references 54 and 56, and which extend from the light source 11, through the inner conduit of the peripheral frame 22, to a lower end of the peripheral frame 22, then along the beam 13. The electrical conductors can be connected to the light source 11 on the one hand, and to an electrical power supply grid of the vehicle on the other hand.

Figures 4 and 5 are detailed views of the first angular portion 38, hereafter more simply called angular portion 38, and the light source 11.

The angular portion 38 comprises a tubular central element 42 provided, at a lower end 42a, with a vertical tip 44 and, at an upper end 42b, a horizontal tip 46.

The vertical tip 44 is adapted to be fitted into the upper end of the vertical portion 34. The horizontal tip 46 is adapted to be fitted into the end of the horizontal portion 36 situated on the aisle side.

Furthermore, the tip 44 has a through opening for the passage of the electrical conductors 54 and 56, which extends from the central element 42 to a lower end of the tip 44.

The central element 42 is a hollow tube comprising two planar side walls 42c, 42d, respectively oriented toward the front and the back of the seat 9, a lower wall 42e, with surface or linear bearing against the upper corner 28, and an upper wall 42f. The section of the lower 42e and upper 42f walls by a plane parallel to the backrest 17 is in the shape of a quarter circle. Furthermore, the upper wall 42f has a rounded shape toward the front and the back of the seat 9.

The central element 42 defines a housing within which the light source 11 is mounted. In particular, the upper wall 42f is pierced with a through opening 48, which is substantially rectangular, the light source 11 being mounted inside the central element 42 so as to provide light through the opening 48.

The light source 11 comprises a support plate 50, three light-emitting diodes (LED) 52, fixed to the plate 50, a translucent cover plate 53 and two electrical conductors 54, 56. The plate 50, diodes 52 and conductors 54, 56 are shown transparently in Figure 5.

The plate 50 is secured to the central element 42. It comprises a substantially rectangular lower wall 50a for supporting the diodes 52, and four side walls protruding from each of the rims of the lower wall to the rims of the opening 48. The plate 50 thus defines a substantially parallelepiped housing inside the central element 42.

The diodes 52 are fastened on the lower wall 50a of the plate 50. The diodes 52 are for example RGB LED, i.e. red, green or blue diodes. The three diodes 52 are for example the same color, but they can also be different colors, any color combination being possible.

The two electrical conductors, positive 54 and negative 56, electrically power the diodes 52. Said conductors 54, 56 are electrically connected to the two terminals of each of the diodes 52, and extend in the central element 42, then through the through opening of the tip 44, toward the electrical power supply grid of the vehicle.

The cover plate 53 is intended to diffuse the light emitted by the diodes 52 toward the aisle of the vehicle. The cover plate 53, which has a shape combined with the opening 48, comprises three lumps 58 arranged overhanging the diodes 52. The cover plate 53 is for example fixed by adhesion to the side walls of the plate 50.

Figure 6 shows a pair of seats comprising an aisle seat 64 according to a second embodiment of the invention and a window seat 64'. In this Figure 6, elements identical to those of the pair of seats 9, 9' of Figures 1 to 4 bear the same reference numbers.

In this embodiment, the light source 65 of the seat 64 is comprised in an assist grip handle 66, intended to allow the vehicle's passengers to stabilize themselves. This handle 66 is mounted on an upper corner of the lateral edge 67 of the backrest 68 of the seat 64 intended to be oriented toward the aisle of the vehicle.

The backrest 68 of the seat 64 comprises a peripheral frame 69, which differs from the peripheral frame 22 of the seat 9 in that its angular portion 70 does not comprise a light source. It is therefore not provided with an opening comparable to that 48 of the first embodiment. The frame 69 supports the assist grip handle 66, which comprises a central portion 72 intended to be gripped by a passenger. The central portion 72 is extended at its lower end by a horizontal tubular element 73, fixed to the vertical portion 74 of the frame 69, and a vertical tubular element 76, fixed to the upper portion 78 of the frame 69.

The central portion 72 of the handle 66 is a hollow tube curved along a central axis in the shape of a quarter circle. It thus defines an inner housing that extends continuously in the vertical portion 74 of the frame 69.

The central portion 72 comprises the light source 65. The light source 65 is for example identical to the light source 11 described in reference to Figures 1 to 4. It in particular comprises electrical conductors that extend in the central portion 72, then in the vertical portion 74 of the frame 69, toward the electrical power supply grid of the vehicle.

Done in this way, the invention makes it possible to create a light path in a passenger transport vehicle, at a height close to passengers' eye level. Such a light path guides passengers during their movement in the vehicle, and clearly indicates the position of the seats.

Furthermore, since the light source 11 or 65 is incorporated into an element of the seat 9 or in the immediate vicinity of the seat 64, it does not clutter the passenger compartment of the vehicle 1.

It should, however, be understood that the embodiments presented above are not limiting.

In particular, in another embodiment, the seats are seats intended for people with reduced mobility (PRM).

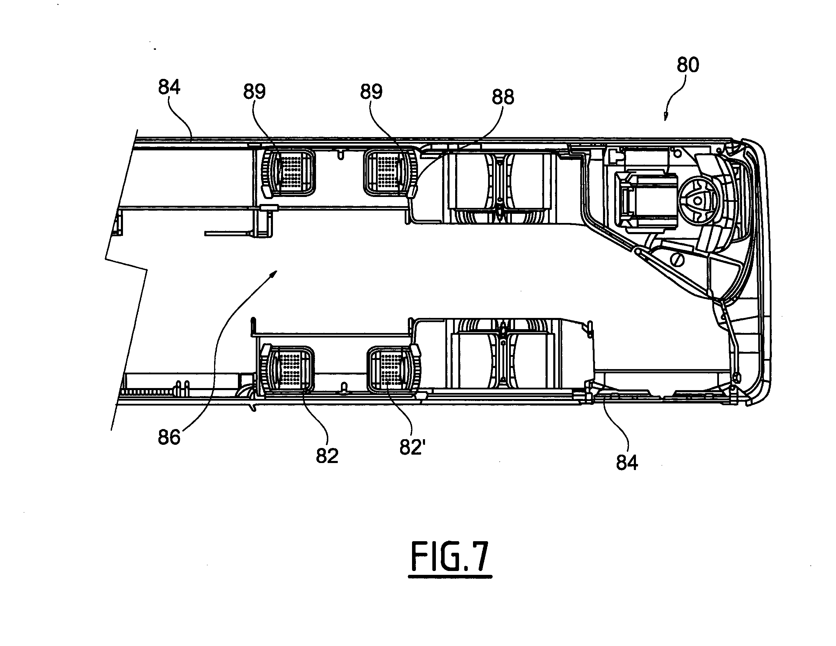

Figure 7 thus shows a passenger transport vehicle 80 according to a third embodiment.

The vehicle 80 comprises two pairs of PMR seats 82 arranged facing each other. The seats 82 of each pair are adjacent on one side to a wall 84 of the vehicle 80 and on another side to an aisle 86 of the vehicle 80.

The seats 82 are similar to the seat 9 described in reference to Figures 1 to 5, but are easier to access and larger. They comprise a light source 88, arranged near the upper corner of a lateral edge 89 of their backrest adjacent to the aisle 86, and oriented toward said aisle, therefore easily visible from said aisle.

The light source 88 is for example blue, characteristic of PRM signaling. It therefore makes it possible to visibly and unambiguously indicate the PRM seat, since it is incorporated into that seat.

In particular, according to one alternative embodiment, the peripheral frame of the backrest of the seat can comprise only an angular portion.

## Claims

1. A seat (9; 64; 82) for a passenger transport vehicle (1), comprising a seat portion (16) and a backrest (17; 68), said backrest (17; 68) comprising an outer lateral edge (40; 67; 89) intended to be adjacent to a passenger circulation aisle (7; 86), wherein said seat (9; 64; 82) comprises at least one light source (11; 65; 88), arranged near an upper corner (38; 66) of said outer lateral edge (40; 67; 89), and intended to be oriented toward said aisle (7; 86) **characterized in that** said backrest (17; 68) comprises a support panel (21) for a user's back and a peripheral frame (22; 69) at least partially surrounding said support panel (21), and **in that** said light source (11; 65; 88) is incorporated into said peripheral frame (22; 69), wherein said peripheral frame (22) comprises an angular portion (38) provided with a housing for receiving said light source (11; 88).

2. The seat (9; 64) according to claim 1 , **characterized in that** said angular portion (38) is hollow, **in that** it is pierced with an opening (48), and **in that** said light source (11) is mounted inside said angular portion (38) so as to provide light through the opening (48).

3. The seat (82) according to claim 1 , **characterized in that** said peripheral frame (69) comprises an assist grip handle (66), intended to allow the vehicle's passengers to stabilize themselves, provided with a housing for receiving said light source (65).

4. The seat (9; 64; 82) according to any one of claims 1 to 3, **characterized in that** said peripheral frame (22; 69) is hollow, and **in that** said seat (9; 64; 82) comprises at least two electrical conductors (54, 56) that extend through said peripheral frame (22; 69) and that can be connected, on the one hand, to the light source (11; 65; 88), and on the other hand, to an electrical power supply grid.

5. The seat (9; 64; 82) according to any one of the claims 1 to 4, **characterized in that** said light source (11; 65; 88) comprises at least one light-emitting diode (52).

6. The seat (82) according to any one of the claims 1 to 5, **characterized in that** the seat is intended for a passenger with reduced mobility.

7. A passenger transport vehicle (1; 80) comprising at least one passenger circulation aisle (7; 86), **characterized in that** it comprises at least one seat (9; 64; 82) according to any one of the claims 1 to 6, comprising a backrest (17; 68) whereof the outer lateral edge (40; 67; 89) of which is adjacent to said aisle (7; 86), and **in that** the light source (11; 65; 88) is oriented toward said aisle (7; 86).

8. A passenger transport vehicle comprising at least one passenger circulation aisle (7), comprised between two columns of seats (9; 64) adjacent to said aisle (7), **characterized in that** the seats (9; 64) of at least one of said columns are seats according to any one of the claims 1 to 6, comprising a backrest (17; 68), the outer lateral edge (40; 67) of which is adjacent to said aisle (7) and the light source (11; 65) of which is oriented toward said aisle (7).

## Patentansprüche

1. Sitz (9; 64; 82) für ein Fahrgast-Transport-Fahrzeug (1), umfassend einen Sitz-Teil (16) und eine Rückenlehne (17; 68), wobei die Rückenlehne (17; 68) eine äußere seitliche Kante (40; 67; 89) umfasst, die dazu bestimmt ist, angrenzend an einen Fahrgast-Umlauf-Gang (7; 86) zu sein, wobei der Sitz (9; 64; 82) wenigstens eine Lichtquelle (11; 65; 88) umfasst, die nahe einer oberen Ecke (38; 66) der äußeren seitlichen Kante (40; 67; 89) angeordnet ist und dazu bestimmt ist, in Richtung auf den Gang (7; 86) orientiert zu werden, **dadurch gekennzeichnet, dass** die Rückenlehne (17; 68) eine Stützplatte (21) für den Rücken eines Benutzers und einen Umfangsrahmen (22; 69) umfasst, der die Stützplatte (21) wenigstens teilweise umgibt, und dadurch, dass die Lichtquelle (11; 65; 88) in den Umfangsrahmen (22; 69) eingearbeitet ist, wobei der Umfangsrahmen (22) einen gewinkelten Teil (38) umfasst, der mit einem Gehäuse zum Aufnehmen der Lichtquelle (11; 88) versehen ist.

2. Sitz (9; 64) nach Anspruch 1, **dadurch gekennzeichnet, dass** der gewinkelte Teil (38) hohl ist, dadurch, dass er mit einer Öffnung (48) durchbohrt ist, und dadurch, dass die Lichtquelle (11) innerhalb des gewinkelten Teils (38) montiert ist und so Licht durch die Öffnung (48) liefert.

3. Sitz (82) nach Anspruch 1, **dadurch gekennzeichnet, dass** der Umfangsrahmen (69) einen Fahrgast-Haltegriff (66) umfasst, der dazu bestimmt ist, den Fahrgästen des Fahrzeugs zu ermöglichen, sich abzustützen, und versehen ist mit einem Gehäuse zum Aufnehmen der Lichtquelle (65).

4. Sitz (9; 64; 82) nach irgendeinem der Ansprüche 1 bis 3, **dadurch gekennzeichnet, dass** der Umfangsrahmen (22; 69) hohl ist, und dadurch, dass der Sitz (9; 64; 82) wenigstens zwei elektrische Leiter (54; 56) umfasst, die sich durch den Umfangsrahmen (22; 69) erstrecken und die verbunden werden können einerseits mit der Lichtquelle (11; 65; 88) und andererseits mit einem elektrischen Stromversorgungsnetz.

5. Sitz (9; 64; 82) nach irgendeinem der Ansprüche 1 bis 4, **dadurch gekennzeichnet, dass** die Lichtquelle (11; 65; 88) wenigstens eine Licht emittierende Diode (52) umfasst.

6. Sitz (82) nach irgendeinem der Ansprüche 1 bis 5, **dadurch gekennzeichnet, dass** der Sitz bestimmt ist für einen Fahrgast mit verminderter Mobilität.

7. Fahrgast-Transport-Fahrzeug (1; 80), umfassend wenigstens einen Fahrgast-Umlauf-Gang (7; 86), **dadurch gekennzeichnet, dass** es wenigstens einen Sitz (9; 64; 82) nach irgendeinem der Ansprüche 1 bis 6 umfasst, umfassend eine Rückenlehne (17; 68), von der die äußere seitliche Kante (40; 67; 89) davon an den Gang (7; 86) angrenzend ist, und dadurch, dass die Lichtquelle (11; 65; 88) in Richtung auf den Gang (7; 86) orientiert ist.

8. Fahrgast-Transport-Fahrzeug, umfassend wenigstens einen Fahrgast-Umlauf-Gang (7) einbezogen zwischen zwei Spaltenreihen von Sitzen (9; 64), die an den Gang (7) angrenzen, **dadurch gekennzeichnet, dass** die Sitze (9; 64) von wenigstens einer der Spaltenreihen Sitze nach irgendeinem der Ansprüche 1 bis 6 sind, umfassend eine Rückenlehne (17; 68), deren äußere seitliche Kante (40; 67) an den Gang (7) angrenzend ist und deren Lichtquelle (11; 65) in Richtung auf den Gang (7) orientiert ist.

## Revendications

1. Siège (9 ; 64 ; 82) pour un véhicule de transport de passager (1), comprenant une portion de siège (16) et un dossier (17 ; 68), ledit dossier (17 ; 68) comprenant un bord latéral extérieur (40 ; 67 ; 89) destiné à être adjacent à un couloir de circulation de passager (7 ; 86), dans lequel ledit siège (9 ; 64 ; 82) comprend au moins une source lumineuse (11 ; 65 ; 88), agencée à proximité d'un coin supérieur (38 ; 66) dudit bord latéral extérieur (40 ; 67 ; 89), et destinée à être orientée vers ledit couloir (7 ; 86), **caractérisé en ce que** ledit dossier (17 ; 68) comprend un panneau de support (21) pour le dos d'un utilisateur et un cadre périphérique (22 ; 69) entourant au moins partiellement ledit panneau de support (21), et **en ce que** ladite source lumineuse (11 ; 65 ; 88) est incorporée au dit cadre périphérique (22 ; 69), dans lequel ledit cadre périphérique (22) comprend une portion angulaire (38) pourvue d'un logement pour recevoir ladite source lumineuse (11 ; 88).

2. Siège (9 ; 64) selon la revendication 1, **caractérisé en ce que** ladite portion angulaire (38) est creuse, **en ce qu'**elle est percée d'une ouverture (48) et **en ce que** ladite source lumineuse (11) est montée à l'intérieur de ladite portion angulaire (38) de manière à fournir une lumière à travers l'ouverture (48).

3. Siège (82) selon la revendication 1, **caractérisé en ce que** ledit cadre périphérique (69) comprend une poignée d'assistance (66), destinée à permettre aux passagers du véhicule à se stabiliser, pourvue d'un logement pour recevoir ladite source lumineuse (65).

4. Siège (9 ; 64 ; 82) selon l'une quelconque des revendications 1 à 3, **caractérisé en ce que** ledit cadre périphérique (22 ; 69) est creux, et **en ce que** ledit siège (9 ; 64 ; 82) comprend au moins deux conducteurs électriques (54, 56) qui s'étendent à travers ledit cadre périphérique (22 ; 69) et qui peuvent être reliés, d'une part, à la source lumineuse (11 ; 65 ; 88) et, d'autre part, à un réseau d'alimentation d'énergie électrique.

5. Siège (9 ; 64 ; 82) selon l'une quelconque des revendications 1 à 4, **caractérisé en ce que** ladite source lumineuse (11 ; 65 ; 88) comprend au moins une diode électroluminescente (52).

6. Siège (82) selon l'une quelconque des revendications 1 à 5, **caractérisé en ce que** le siège est destiné à un passager à mobilité réduite.

7. Véhicule de transport de passager (1 ; 80) comprenant au moins un couloir de circulation de passager (7 ; 86), **caractérisé en ce qu'**il comprend au moins un siège (9 ; 64 ; 82) selon l'une quelconque des revendications 1 à 6, comprenant un dossier (17 ; 68) dont le bord latéral extérieur (40 ; 67 ; 89) est adjacent au dit couloir (7 ; 86), et **en ce que** la source lumineuse (11 ; 65 ; 88) est orientée vers ledit couloir (7 ; 86).

8. Véhicule de transport de passager comprenant au moins un couloir de circulation de passager (7), compris entre deux colonnes de sièges (9 ; 64) adjacents au dit couloir (7), **caractérisé en ce que** les sièges (9 ; 64) d'au moins l'une desdites colonnes sont des sièges selon l'une quelconque des revendications 1 à 6, comprenant un dossier (17 ; 68), dont le bord latéral extérieur (40 ; 67) est adjacent au dit couloir (7) et dont la source lumineuse (11 ; 65) est orientée vers ledit couloir (7).
